# EUROPÄISCHE PATENTSCHRIFT

(11) **EP 0 799 434 B1**
(45) Veröffentlichungstag und Bekanntmachung des Hinweises auf die Patenterteilung: **09.04.2003**
(21) Anmeldenummer: 95943199.0
(22) Anmeldetag: 22.12.1995
(51) Int. Cl.: G02B 21/22, A61B 19/00

(54) **MIKROSKOP, INSBESONDERE STEREOMIKROSKOP UND VERFAHREN ZUM ÜBERLAGERN ZWEIER BILDER**
MICROSCOPE, IN PARTICULAR A STEREOMICROSCOPE, AND A METHOD OF SUPERIMPOSING TWO IMAGES
MICROSCOPE, NOTAMMENT STEREOMICROSCOPE, ET PROCEDE PERMETTANT DE SUPERPOSER DEUX IMAGES

(30) Priorität: 23.12.1994 CH 393294
(43) Veröffentlichungstag der Anmeldung: 08.10.1997
(73) Patentinhaber: Leica Microsystems AG, 9435 Heerbrugg (CH)
(72) Erfinder: SPINK, Roger, CH-9442 Berneck (CH); BRAUNECKER, Bernhard, CH-9445 Rebstein (CH)
(74) Vertreter: Stamer, Harald
(86) Internationale Anmeldenummer: EP9505112
(87) Internationale Veröffentlichungsnummer: WO96020421

(56) Entgegenhaltungen:
- EP-A- 0 629 963
- FR-A- 2 682 778
- US-A- 4 722 056
- SCANNING MICROSCOPY, Bd. 4, Nr. 4, 1990 CHICAGO,US, Seiten 825-828, J.C.OLIVO ET AL. 'DIGITAL CORRELATION OF ION AND OPTICAL MICROSCOPIC IMAGES: APPLICATION TO THE STUDY OF THYROGLOBULIN CHEMICAL MODIFICATION'

## Beschreibung

Die Erfindung betrifft eine bilddarstellende Einrichtung, insbesondere ein Mikroskop, insbesondere ein Stereomikroskop, beispielsweise ein Operationsmikroskop, insbesondere ein Video(-stereo-)-mikroskop, das mit einer elektronischen Datenverarbeitungseinheit und/oder einem Display verbunden ist, nach dem Oberbegriff des Anspruches 1 und ein Verfahren nach dem Oberbegriff des Anspruches 9.

Solche Mikroskope werden unter anderem auch in der Technik, z.B. Werkstofftechnik. Materialanalyse, Siliziumtechnik, Kriminologie usw., insbesondere jedoch auch in der Medizin für Diagnose, serologische Untersuchungen, bei Operationen usw. angewendet.

Im folgenden wird beispielhaft insbesondere auf die Verwendung der Erfindung im Bereich der Operationsmikroskopie eingegangen. Die Verwendung in anderen Bereichen fällt jedoch ebenso unter den Anwendungsbereich der Erfindung.

Operationsmikroskope dienen dem Operateur zur optischen Vergrösserung des Operationsgebietes. Die Operationstechnik ist hierbei so weit fortgeschritten, dass Vergrösserungen im Bereich von 50-fach und darüber keine Seltenheit sind. Eine Vergrösserung führt manchmal dazu, dass der Operateur das Gebiet, das er durch das Mikroskop betrachtet, nicht immer eindeutig einem tatsächlichen Ort am Patienten zuordnen kann. Eine hilfsweise Überlagerung des mikroskopisch gesehenen Bildes mit beispielsweise verstärkten Konturen oder sonstigen Markierungen ist daher häufig wünschenswert. Zur Erfüllung dieses Wunsches sind im Stand der Technik im wesentlichen zwei Verfahren bekannt:
Randverbesserungen, Bildfärbungen, Kontrastverbesserungen etc. werden mittels elektronischer Bildverarbeitung bewerkstelligt. Die dazu benötigten Bilddaten werden unmittelbar aus dem betrachteten Bild selbst gewonnen und lediglich mathematisch transformiert. Werden solche Daten den betrachteten Bilddaten überlagert, ergibt sich dabei kein wesentliches Problem, da diese Bilddaten an denselben Bildort, von dem sie gewonnen wurden, wieder zurückgegeben werden.

Bei anderen Konstruktionen sind mit dem Mikroskopstrahlengang Strahlenteller verbunden, denen Displays zugeordnet sind, über die Bilder in den Strahlengang eingespiegelt werden können, die sich mit den tatsächlich gesehenen Bildern im Auge des Betrachters überlagern. Solche Bilder, z.B. Bilder vom selben Ort, jedoch zu einem früheren Zeitpunkt aufgenommen, sind oft nur schwer dem gesehenen Bild überlagerbar, da sie u.U. mit unterschiedlichen Vergrösserungen, anderen Mikroskopeinstellungen usw. aufgenommen wurden.

Ein spezielles Gebiet für die Überlagerung von Bildern ergibt sich z.B. bei der Anwendung von Computertomographie (CT), Magnetresonanz- bzw. Kernspintomographie (MRI) oder Positronenstrahlungsdiagnose (PET) im Zusammenhang mit der Stereomikroskopie. Daten aus CT und MRI werden gewonnen, um ein Schnittbild des interessierenden Gebietes zu erhalten, das schlussendlich nach EDV-mässiger Verarbeitung die Darstellung eines dreidimensionalen, wirklichkeitsgetreuen Modells auf einem Computermonitor (Stereobildschirm) ermöglicht, vgl. hierzu in der Firmenschrift der ARTMA BIOMEDICAL, INC. die von M. Truppe verfaßten Chapter 1 ("Interventional Video Tomography (IVT)"), Seiten 1-25, und Chapter 2 ("Digital Substraction Angiography (DSA)"), Seiten 27-34, sowie Chapter 3 ("Technical Specification"), Seiten 35-41 (April 07, 1994).

Die EP,A,0629963 (General Electric Company)gibt ein System an, bei dem röntgenologische Daten über ein semitransparentes Sichtfenster einem Operateur zugespielt werden. Ein Mikroskopischer optischer Strahlengang ist dabei jedoch nicht vorgesehen.

Die EP,A,0629963 (General Electric Company) gibt ein System an, bei dem rontgenologische Daten uber ein semitransparentes Sichtfenster einem Operateur zugespielt werden Ein mikroskopischer optischer Strahlengang ist dabei jedoch nicht vorgesehen, so dass sie keine Lehre fur die Operationsmikroskopie bietet

Die US,A,4722056 und die CH,A,684291 (entspricht der FR,A,2682778, die ebenso auf die Prioritat der DE,A,4134481 zuruckgeht) beschreiben Einrichtungen, die ein Uberlagern theoretisch ermoglichen. Unter der Bezeichnung MKM wurde ein rechnergestütztes Operationsmikroskop auf den Markt gebracht, bei dem sowohl Risikozonen wie auch Gewebestrukturen markiert werden können, als auch vor der stereoskopischen Betrachtung gewonnene, dreidimensionale Diagnosedaten

Die US-A-4722056 und die CH-A-684291 (entspricht der FR,A.2682778, die ebenso auf die Priorität der DE,A,4134481 zurückgeht) beschreiben Einrichtungen, die ein Überlagern theoretisch ermöglichen Unter der Bezeichnung MKM wurde ein rechnergestütztes Operationsmikroskop auf den Markt gebracht, bei dem sowohl Risikozonen wie auch Gewebestrukturen markiert werden können, als auch vor der stereoskopischen Betrachtung gewonnene, dreidimensionale Diagnosedaten dem mikroskopisch gesehenen Bild überlagert werden können, um vorausschauendes Operieren zu ermöglichen. Eine exakte Überlagerung, so dass beispielsweise Umrisskonturen aus dem CT mit den stereoskopisch gesehenen Umrisskonturen übereinstimmen, ist damit jedoch nicht möglich.

Durch dreidimensionale Bilder ist es den behandelnden Ärzten möglich, Art und Ausbreitung des kranken Gebietes besser zu lokalisieren und entsprechende Operationsschritte besser vorauszuplanen. Die EDV-mässig vorliegenden. dreidimensionalen Bilddaten sollen nun erfindungsgemäss in verbesserter Weise einem Operateur auch unmittelbar bei einer Operation zugänglich sein und zwar derart, dass diese Bilddaten dem tatsächlich gesehenen Bild im Operationsmikroskop zur gleichen Zeit und positionsrichtig exakt überlagert werden: dies gegebenenfalls auch in einem Abdeckmodus bzw. Transparentmodus, der es dem Operateur erlaubt, quasi unter die Oberfläche der tatsächlich betrachteten Stelle zu sehen und derart eine verbesserte Planung und Führung des Operationsinstruments zu ermöglichen. Daraus soll sich eine höhere Positioniergenauigkeit und eine kürzere Operationszeit ergeben, als dies heute möglich ist.

Damit diese Überlagerung optimal erfolgt, müssen die optischen Parameter des gesehenen Bildes und die Parameter des zu überlagernden (dreidimensionalen) Bildes bekannt sein, da eine solche Überlagerung nur einen Sinn macht, wenn die mikroskopisch gesehenen und die überlagerten Bildinformationen geometrisch korrekt übereinstimmen. Die geometrische Korrektheit ist bei den bekannten Überlagerungen bis heute nicht befriedigend.

Diesen Umstand zu beseitigen, ist eine der Hauptaufgaben der Erfindung.

Gelöst wird diese Aufgabe beispielsweise durch die Anwendung des Verfahrens nach Anspruch 9 bzw. einer Vorrichtung nach Anspruch 1.

Die erstmalige Verwendung einer adaptiven Regelvorrichtung zur Abänderung eines darzustellenden Bildes, in Abhängigkeit von einem anderen dargestellten Bild, führt zum gesuchten Erfolg. Dabei ist es zunächst unerheblich, wo die tatsächliche Bildüberlagerung stattfindet. Beispielhaft seien folgende Varianten aufgeführt:

Bei Darstellung des einen zweidimensionalen Bildes für ausschliesslich eines der beiden Augen eines Betrachters und des anderen zweidimensionalen Bildes für das andere Betrachterauge erfolgt die Überlagerung im Gehirn des Betrachters Sie kann aber ebenso im Computer rechnerisch erfolgen, um das überlagerte Bild als integriertes Bildsignal an einen Monitor o.dgl. zu liefern; es können aber auch beide Bildsignale direkt an einen Monitor o.dgl. geliefert werden, der beispielsweise zwei Eingangskanäle - gegebenenfalls für einen rechten und linken Bildkanal eines Stereobildpaares - aufweist. Weiters ist eine rein optische Überlagerung denkbar, z.B. im Zwischenbild eines optischen Strahlenganges o dgl.

Für die Regelvorrichtung sind im Rahmen der Erfindung verschiedene qualitativ unterschiedliche Massnahmen zur Erfassung und Korrektur der Abbildungsgeometrie bzw. Abbildungsparameter vorgesehen:

Stets gewährleistet muss sein, dass die Regelvorrichtung primäre (operationale) Abbildungsparameter (Blickrichtung, also Systemalignment bzw. Blickwinkel, Perspektive usw., z.B. Mikroskopausrichtung) erfasst und zur Adaptierung der Abbildungsgeometrie der zweiten Bildinformation benutzt. Realisiert wird dies beispielsweise durch einen Abgriff der Richtungsangaben und Einstellungen von den Einstellorganen der ersten Vorrichtung, z.B. vom Stativ oder durch Überwachung der Mikroskopposition durch eine unabhängige Sensoreinrichtung, wie z.B. ein Ultraschall- oder Infrarotpositions- bzw. Koordinatenbestimmungsgerät (z.B. PIXSYS (R)) und der Vergrösserungseinstelleinrichtung des Mikroskops.

Eine verbesserte Anpassung ergibt sich, wenn auch die sekundären Abbildungsparameter (z.B. Gesichtsfeld, Vergrosserung, Schärfentiefebereich) erfasst und zur Adaptierung der Abbildungsgeometrie der zweiten Bildinformation benutzt werden. Dies wird beispielsweise realisiert durch einen Abgriff des tatsächlichen z-Abstandes (Das ist der Abstand vom betrachteten Objekt bis zur Objektivauflagefläche) vom betrachteten Objekt und einer Vergrösserurigsmessung (Gamma-Messung) im Strahlengang der ersten Vorrichtung.

Optimal ist es selbstverständlich, wenn auch die tertiären Abbildungsparameter (z.B. Störung der Metrik, Verzeichnung in Abhängigkeit von z-Abstands- und Gammamessung im Strahlengang der ersten Vorrichtung) erfasst und zur Korrektur der Abbildungsgeometrie der zweiten Bildinformation herangezogen werden. Solche tertiären Abbildungsparameter werden bevorzugt durch Vergleichsmessungen an bekannten Objekten (z.B. Bildtafeln mit einem bekannten geometrischen Muster oder dreidimensionale Objekte mit bekannten geometrischen Abmessungen, die zu Eichzwecken bzw. zur Erfassung der Abbildungsfehler herangezogen werden können) durchgeführt.

Die primären und sekundären Abbildungsparameter sind typenspezifische Parameter, die von der Art und vom geometrischen bzw. optischen Aufbau der ersten Vorrichtung abhängen, während tertiäre Abbildungsparameter senenspezifisch sind. Sie hängen u.a. von der Qualität der einzelnen optischen Bauelemente und deren Montage und von der Justierung der jeweiligen Einzelvorrichtung ab.

Bevorzugt ist natürlich eine adaptive Regelvorrichtung, die sowohl primäre, sekundäre, als auch tertiäre Abbildungsparameter erfasst und aufgrund dieser die zu überlagernden zweiten Bilddaten modifiziert und überlagert. Dabei werden gegebenenfalls zuerst die sekundären und tertiären Abbildungsparameter ausgewertet und erst dann eine Angleichung des Koordinatensystems dieser beiden Vorrichtungen vorgenommen, indem rechnerisch das eine Bild in das andere, bereits geometrisch richtig dargestellte Bild gedreht bzw. geschwenkt wird; dies jeweils natürlich bevorzugt dreidimensional.

Die erforderlichen Kalibrationsvorgänge können dabei bevorzugt über den gesamten Verstellbereich der Systemdaten der Vorrichtungen durchgeführt werden, indem z.B. während einer langsamen Verstellung sämtlicher Systemdaten einer Vorrichtung gleichzeitig permanent kalibriert wird und die sich dabei ergebenden, unterschiedlichen Rechenvorschriften kontinuierlich aufgezeichnet und in einem Speicher abgelegt werden, um später beim Betrieb der Einrichtung jedem individuellen Einstellwert der Vorrichtung den entsprechenden Korrekturwert überlagern zu können.

Um die Menge der EDV-mässig zu verarbeitenden Bilddaten etwas zu reduzieren und die Verarbeitung dadurch zu beschleunigen, ist entsprechend einer Weiterentwicklung der Erfindung vorgesehen, dass die nötige Korrekturvorschrift für die typenspezifischen Algorithmen (mathematisch ermittelbare optischen Verzeichnungen etc.) vorab berechnet werden und in der Einrichtung abgespeichert sind, so dass bei der tatsächlichen Anpassung zuerst eine automatische Berechnung und erst danach eine Messung mit weitergehender Adaptionsfolge erfolgt.

Zur Erleichterung und Beschleunigung der Eliminierung der serienspezifischen Abbildungsparameter wird bevorzugt vorgeschlagen, die jeweilige Einrichtung einem Eich- oder Kalibriervorgang zu unterziehen, wonach die dabei erfahrenen Eichparameter in einem Speicher abgelegt und bei der Adaption der zweiten Bilddaten automatisch herangezogen werden. Sobald also bei einer bestimmten Bau-Type der Einrichtung eine bestimmte Serie Bilder aus einer anderen Bildquelle überlagert werden, werden diese Bilder mit den abgespeicherten Werten gemäss einer vor der Geräteauslieferung durchgeführten Eichung derart modifiziert, dass die Bilder deckungsgleich überlagert werden können, sofern sie vom selben Objekt stammen. Der Eichvorgang kann dabei sinnvollerweise für jedes Einzelgerät durchgeführt werden. Bei Bedarf ist es sogar denkbar, dass ein für den Eichvorgang zweckmässiger Normbauteil zum Einsatz gelangt, der dem Servicepersonal vor Ort oder sogar dem Anwender direkt zur Verfügung steht, um von Zeit zu Zeit eine Nacheichung zu ermöglichen.

Die beschriebenen Vorabberechnungen und Eichungen bzw. Korrekturwerteabspeicherungen kommen jenen Geräten entgegen, die über eine beschränkte Speicher- bzw. Rechenkapazität verfügen. Bei genügender Rechnerkapazität mit entsprechender Rechengeschwindigkeit ist es auch denkbar, Geräte bis zu einem gewissen Grad optimiert, jedoch ohne typenspezifische Algorithmen-Vorberechnung, auszuliefern und dem Rechner eine Bilderkennungsvorrichtung einzubauen, der die genauen Abmessungen eines Normbauteiles bekannt sind; sie verlangt vorzugsweise in gewissen Abständen nach einer Eichroutine, bei der lediglich durch Videobetrachtung des Normgegenstandes die Abweichung von den eingespeicherten Abmessungen erfasst und daraus die Korrekturparameter ermittelt werden, die allfällig überlagerten Bildern eingeschrieben werden. Bevorzugt ist als Normbauteil dabei ein Gegenstand vorgesehen, der für die abbildenden Strahlen der ersten und zweiten Vorrichtung geeignete, erfassbare Strukturen darstellt.

Bei der Kalibrierung bzw. Eichung kann sinnvoll wie folgt vorgegangen werden: Ein Prüfobjekt mit genormten - und vorzugsweise für alle verwendeten bilderzeugenden Strahlengänge erkennbaren - Abmessungen wird mit seinen wirklichen Abmessungen CAD-mässig erfasst und rechnerisch als Voxelvolumen mit wirklichkeitsgetreuen Aussenabmessungen in einem Speicher abgelegt. Anschliessend wird dieses Prüfobjekt vor den Strahlengang der ersten Vorrichtung gelegt, die über eine stereoskopische Videoaufzeichnungsvorrichtung (z.B. ein CCD pro Strahlengang eines Stereomikroskops) verfügt und durch diese aus mehreren Perspektiven betrachtet. Die jeweiligen, den einzelnen Perspektiven zugeordneten Ansichten werden aufgenommen und mittels Rechenprogramm in ein Voxelvolumen umgerechnet, das somit, da durch die Abbildungsparameter modifiziert (z.B. verzerrt), der Wirklichkeit entspricht. Dieses aufgenommene Voxelvolumen wird sodann - z.B. voxelweise - mit dem ursprünglich rechnerisch erfassten Voxelvolumen verglichen. Die sich daraus ergebenden Unterschiede werden als Rechenvorschrift erkannt und im Speicher abgelegt. Sobald später bei gleicher Einstellung des Mikroskopes ein anderer Gegenstand vor dessen Strahlengang gelegt wird, kann dieser mittels der Rechenvorschrift so modifiziert werden, dass er innerhalb des Rechners bzw. Speichers seinen wirklichkeitsgetreuen Proportionen entspncht und auch als solcher dargestellt werden kann.

In den meisten Fällen wird der eben beschriebene Vorgang mit der Umrechnung über das Voxelvolumen lediglich deshalb durchgeführt, weil man auf das Voxelvolumen zurückgreift, wenn man im "Abdeckmodus" unter die Oberfläche des betrachteten Objektes blicken möchte, wie dies lagerichtig durch die Erfindung ermöglicht wird. Dann werden nämlich bei Bedarf schichtweise die Voxelvolumina unterhalb der mikroskopisch betrachteten Stelle abgetragen, so dass man schichtweise in die Tiefe blicken kann, natürlich ist auch die 3-D-Darstellung des gesamten oder eines Teiles des Voxelvolumens denkbar. Dazu ist eine optisch oder softwaremässig einstellbare Gewichtung der Bildhelligkeiten des mikroskopischen Bildes bzw. des überlagerten Bildes möglich. Für die reine Kalibrierung bzw. Eichung genügt das Analysieren der reinen Projektion des betrachteten Normbauteiles, wobei dessen erkannte Kantenlinien bzw. deren Eckpunkte vektoriell abgelegt und weiterbearbeitet werden konnen. Andererseits, und dies ist ein wichtiger Punkt einer der Ausführungsformen der Erfindung, können mit diesen Rechenvorschriften andere lediglich rechnerisch vorhandene "korrekte" Bilddaten, z.B. aus einem CT usw., nachkorrigiert werden, um geometrisch korrekt den z.B. verzeichneten mikroskopischen Bilddaten zu entsprechen.

Selbstverständlich ist dabei die Berücksichtigung der tatsächlichen Lage eines Gegenstandes im Raum häufig von Bedeutung, insbesondere bei stereotaktischen Operationen o.dgl. Dazu ist im Rahmen der Erfindung eine Positionserkennungseinrichtung vorgesehen, die sowohl den Gegenstand (Prüfobjekt) als auch die Position des Mikroskops im Raum vermisst; als Beispiel mag das System der Firma Pixsys für eine geeignete Positionserfassungseinrichtung dienen, bei dem am Gegenstand ebenso wie an der Kamera IR-Sender oder IR-Reflektoren in bekannten Abständen montiert sind und deren Position im Raum durch das System erfasst und weiterverarbeitbar aufgezeichnet wird. Die Erfindung ist jedoch nicht auf dieses System eingeschränkt. Bei den meisten Ausführungsformen ist jedenfalls wichtig, dass am Mikroskop Sensoren oder Signalmarker angeordnet sind, die mit im Raum befindlichen Signalmarkern oder Sensoren zusammenwirken, um die Lage des Mikroskops im Raum zu definieren. Beispielsweise könnte anstelle der Sensoren-Signalmarkeranordnung auch eine reine Videobildverarbeitung treten, bei der eine oder zwei raumfeste Video-Kameras das Mikroskop betrachten und nach vorgängiger Eichung mittels 3-D-Bildverarbeitung die Raumlage des Mikroskops daraus berechnen. Alternativ kann selbstverständlich auch das bereits erwähnte MKM-System im Stativ angewendet werden, bei dem im Stativ bzw. in dessen Gelenken Sensoren die Position des Mikroskopes ermitteln.

Es ist nicht wesentlich, bei welchen der schlussendlich dem Anwender dargestellten Bilder die Korrekturen vorgenommen werden. Es ist genauso denkbar, das Bild des optischen Strahlenganges dem der nichtoptischen Strahlengänge anzupassen, wie auch umgekehrt, wie auch ein "Standardformat" zu schaffen, dem die optischen wie auch die nicht-optischen Abbildungen angepasst werden. Ein solches "Standardformat" könnte beispielsweise auch so gewählt werden, dass es der Wirklichkeit am nächsten ist, bzw. dass es so virtuell abbildet, wie ein Betrachter des entsprechenden Objektes mit einer durchschnittlichen Sehleistung das Objekt tatsächlich sehen würde. Im Falle einer mikroskopischen Betrachtung wäre der durchschnittliche Betrachter natürlich im Verhältnis der Vergrösserung des Mikroskopes virtuell zu verkleinern.

In der Regel ist die Abbildung mittels CT ziemlich wirklichkeitsgetreu. Sind jedoch auch hier Abbildungsverzeichnungen o.dgl. vorhanden, so könnten diese auch dadurch berücksichtigt werden, dass sie gegenüber einem Eichobjekt erfasst und als Rechenvorschrift dargestellt werden, um diese Abweichungen auch den Bilddaten der ersten Vorrichtung zu überlagern. Durch ein derartiges "kreuzweises" Überlagern von Korrekturdaten entstehen sowohl bei der einen als auch bei der zweiten Vorrichtung identische Bilder.

Selbstverständlich ist es auch denkbar, die jeweiligen Bilddaten nach einem Eichvorgang jeweils so zu korrigieren, dass sie der lediglich mathematisch korrekten Vergrösserung des betrachteten Gegenstandes entsprechen, worauf die Bilddaten auch deckungsgleich sind und überlagert werden können.

Die Anpassung des Bildes aus dem Lichtstrahlengang kann bei jenen ersten Vorrichtungen erfolgen, bei denen der Lichtstrahlengang nicht unmittelbar einem Betrachterauge zugeführt wird, wie dies z.B. bei Videomikroskopen der Fall ist, wo der Betrachter auf einen Bildschirm und nicht in den eigentlichen Lichtstrahlengang blickt.

Die Überlagerung der Bilder kann entweder direkt im Okularstrahlengang stattfinden, oder aber softwaremässig im Computer, der das überlagerte (kombinierte) Gesamtbild sodann auf einen Monitor ausgibt. Wesentlich ist schlussendlich, dass das, was der Betrachter sieht, eine massstabsgerechte und schein- oder wirklichkeitsgetreue Überlagerung ist, so als wären beide ursprünglich unabhängigen Bilder durch ein und dieselbe Optik mit derselben Justierung betrachtet worden.

Das Herangehen an das Problem, bei dem z.B. verlangt wird, die Fehler des Mikroskopstrahlenganges zu beseitigen, also eine wirklichkeitsgetreue Abbildung zu erzeugen, anstatt die Fehler auf das andere Bild zu übertragen, bringt z.B. einem Operateur meist nicht viel, da er aufgrund der Vergrösserung ohnedies nicht in einer wirklichkeitsgetreuen Umgebung arbeitet. Sein unmittelbarer Bezugspunkt ist das Operationsinstrument, das er im Gesichtsfeld des Mikroskopes wahrnimmt und von Hand bewegt. Ein Verstellen des Mikroskopstrahlenganges bzw. seiner optischen Elemente führt entsprechend einer speziellen Ausgestaltung der Erfindung automatisch zu einer Anpassung des eingespiegelten (überlagernden) Bildes, so dass der Operateur ohne Unterbrechung weiterarbeiten kann.

Unter einem Display im Sinne der Erfindung sind beispielsweise Bildschirme, Kathodenstrahlröhren etc. zu verstehen, auf denen die Bilder für den Benutzer erscheinen. Solche Displays können sowohl ausserhalb des Mikroskops, z.B. als Computerbildschirm angeordnet, oder auch als kleine Displays ausgebildet sein, die in einem Okularstrahlengang so eingebaut sind, dass ein Anwender sowohl eine optische Wahrnehmung aus dem optischen Strahlengang als auch gleichzeitig (überlagert) eine optische Wahrnehmung aus dem Display erhält. Das rein EDV-mässige Überlagern von Bildern und Darstellen derselben auf einem Display ausserhalb des Mikroskops ist durch die Erfindung mitumfasst, wobei in einem solchen Fall der Okularstrahlengang über einen Strahlenteiler in wenigstens eine Bildaufnahmevorrichtung gespiegelt wird.

Videomikroskope im Sinne der Erfindung sind Mikroskope mit wenigstens einem lichtoptischen Strahlengang und wenigstens einer Bildaufnahmevorrichtung zur Aufnahme und Darstellung des über den Strahlengang gesehenen Bildes auf einem Display. Zu einer sehr häufigen Art von Videomikroskopen sind in der letzten Zeit Videostereomikroskope geworden, bei denen zwei parallele Strahlengänge vorgesehen sind und auf dem Display ein 3-D-Bild darstellbar ist. Im Rahmen der Erfindung liegen jedoch auch alle anderen Mikroskope und Endoskope, die oben beschriebene Vorrichtungen aufweisen und eventuell ohne stereoskopischen Strahlengang auskommen.

Vor allem bei Operationsmikroskopen und insbesondere während einer Operation, fallen eine Menge von Informationen an, die für den Chirurgen von grosser Bedeutung sein können. Dies sind beispielsweise Informationen über den Patienten bzw. dessen Gesundheitszustand bzw. dessen Parameter wie Puls, Blutdruck, Sauerstoffgehalt des Blutes usw., aber auch zusätzlich zu den erwähnten zu überlagernden Bildern z.B. Informationen über bestimmte Parameter des Mikroskops, Informationen über die Lage des beobachteten Operationsfeldes ebenso wie Steuerdaten, die beispielsweise vom Chirurgen willkürlich über Steuerorgane wie Computermouse oder Fussschalter an die Datenverarbeitung bzw. an Steuerorgane für das Mikroskop abgegeben werden, um dieses nach Bedarf zu steuern, z.B. zu fokussieren usw.

Im Rahmen der Erfindung können Daten auch optisch überlagert werden, durch EDV-mässiges Einspielen dieser Daten in das gezeigte zweite Bild, oder durch die Verwendung eines zusätzlichen Displays, das in den Mikroskopstrahlengang eingeblendet wird. Das Überlagern mehrerer unterschiedlicher Daten, z.B. auch Schriftdaten usw., ist möglich.

Beim Überlagern werden erfindungsgemäss die primären, sekundären und tertiären Abbildungsparameter erfasst; das sind insbesondere: Blickrichtung bzw. Blickwinkel, Perspektive usw. (z. B. Mikroskopausrichtung); Vergrösserung des Mikroskopstrahlenganges, Gesichtsfeld und Schärfentiefebereich; Störung der Metrik (insbesondere Verzeichnung).

In den Teilen der Publikationen WO95/27917 und WO95/27918, die auf die CH-1091/94-3 zurückgehen, ist eine Anordnung beschrieben, die es ermöglicht, oben erwähnte Überlagerungen und Datenadaptierungen möglichst schnell bzw. in Echtzeit zu ermöglichen. Eine Kombination der vorliegenden Lehre mit der Lehre der erwähnten Anmeldung bringt daher weitere Vorteile. Insofern gilt der Inhalt der erwähnten Patentanmeldung als im Rahmen dieser Offenbarung liegend.

Die erwähnte CH-A-684291 beschreibt ein Verfahren zur Detektion der Lage der Bildebene. Dieses Verfahren könnte im Rahmen der Erfindung auch Anwendung finden, wobei bevorzugt von einer Triangulationsmessung Abstand genommen wird und die Entfernung sowie der Fokus direkt über Bildauswertung (z.B. Randschärfenauswertung) ermittelt werden.

Insofern und zur praktischen Realisierung durch den Fachmann gilt auch der Inhalt der erwähnten Patentanmeldung und der CH-A-684291 als im Rahmen dieser Offenbarung liegend.

Weitere Details und Ausführungen der Erfindung ergeben sich aus der Zeichnung. Die dort dargestellten Figuren zeigen:
- Fig.1: eine symbolische Darstellung des Prinzips eines erfindungsgemässen Aufbaus mit beidseitiger Datenadaption,
- Fig.2: eine symbolische Darstellung des Prinzip einer erfindungsgemäss benützten Positionserkennungseinrichtung;
- Fig.3: eine Ansicht eines Operationsmikroskopes mit bevorzugten Vermessungsarmen und
- Fig.4: eine symbolische Übersicht zur Anwendung der Erfindung.

Die Figuren werden zusammenhängend beschrieben. Gleiche Bezugszeichen bedeuten gleiche Bauteile. Gleiche Bezugszeichen mit unterschiedlichen Indizes bedeuten ähnliche bzw. funktionsähnliche Bauteile. Die Erfindung ist auf die dargestellten Ausführungsbeispiele nicht eingeschränkt. Vor allem in Kombination in den Teilen der WO95/27917, WO95/27918, WO95/27226 und WO96/13743, die zurückgehen auf die Lehren der folgenden Schweizer Patentanmeldungen: CH-949/94-2, CH-1525/94-0, CH-1295/94-8, CH-1088/94-3, CH-1090/94-1, CH-1089/94-5 und CH-3217/94 zeigen dem Fachmann noch beliebige Varianten. Sie alle fallen unter den Erfindungsbereich Offenbarungsinhalt dieser Anmeldung. Die angefügte Bezugszeichenliste ist dementsprechend fortlaufend geführt.

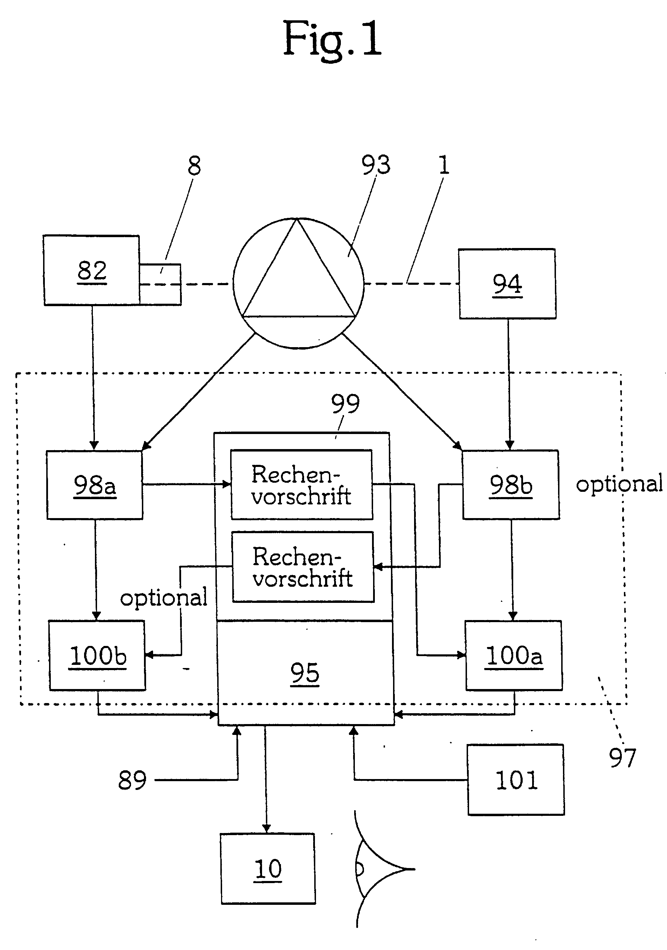

Das Prinzip der Erfindung wird in Fig.1 verdeutlicht:

Ein Mikroskop 82 blickt mit seinem Strahlengang 1 durch sein Hauptobjektiv 8 auf ein Objekt 93, das, sofem es als Prüf- bzw. Eichobjekt verwendet wird, über spezielle Konturen verfügt, die sowohl durch optische als auch durch Röntgen-Strahlen erkennbar sind. Bevorzugt ist das Prüfobjekt 93 zusätzlich noch mit Leuchtdioden für IR-Licht zu seiner Positionsvermessung im Raum und/oder mit Hohlräumen zur Aufnahme von geeigneten Substanzen versehen, die darüber hinaus die Detektion des Objekts durch MRI oder PET o.dgl. erlauben.

Das infolge optischer sekundärer und tertiärer Abbildungsparameter nicht wirklichkeitsgetreu abgebildete Bild wird in einer Erkennungseinheit 98a mit einer vorher eingespeicherten, wirklichkeitsgetreuen, rechnerischen Darstellung des Objektes 93 verglichen. Aus den ermittelten Unterschieden der beiden Bilder wird eine Rechenvorschrift entwickelt, die in einem Speicher 99 abgelegt wird.

Dasselbe Objekt 93 wird durch eine zweite Vorrichtung 94 (z.B. Röntgengerät) betrachtet; ein entsprechendes Bild wird aufgezeichnet. Auch dieses Bild wird über softwaregesteuerte Bildauswertung in einer zweiten Erkennungseinheit 98b mit den ursprünglich abgespeicherten, wirklichen Daten des Prüfobjekts 93 verglichen, woraus gegebenenfalls ebenso Korrekturwerte bzw. eine Rechenvorschrift abgeleitet werden, die ebenso in dem Speicher 99 abgelegt werden. (Dieser Vorgang ist lediglich optional, da Röntgendaten in der Regel geometrisch gut korrigiert sind und mit der Wirklichkeit übereinstimmen.)

Sodann werden in einer Korrektureinheit 100a die Bilddaten der zweiten Vorrichtung 94 mittels erster Rechenvorschrift aus dem Speicher 99, abgeändert, um mit den Bilddaten des Mikroskops 82 deckungsgleich zu werden.

In einer Überlagerungseinrichtung 95 werden die Bilddaten beider Bilder sodann optisch oder elektronisch einander überlagert und z.B. auf einem Monitor 10 oder in einem Okularstrahlengang einem menschlichen Auge zugänglich gemacht. In die Überlagerungseinrichtung 95 können noch zusätzliche, den Patienten betreffende Daten aus anderen Datengeräten 101 eingespiegelt und den übrigen Bilddaten überlagert werden.

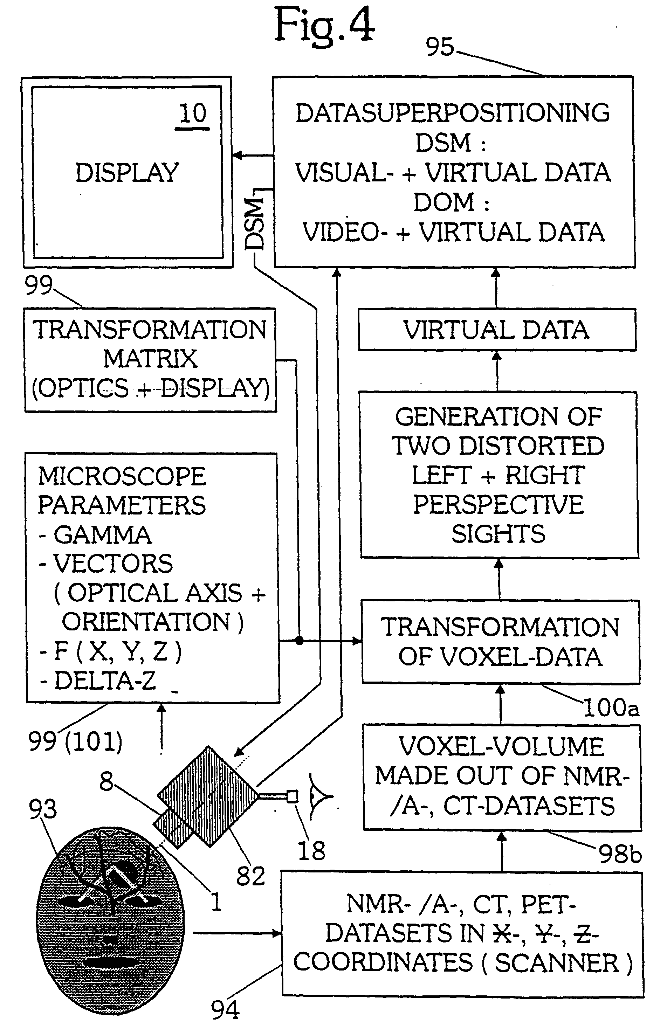

Die Bauteile 98, 99, 100 bilden zusammen eine adaptive Regelvorrichtung 97. Weitere für sich selbst sprechende Informationen sowie das Schema bei der Anwendung an einem Patienten sind aus Fig.4 ersichtlich.

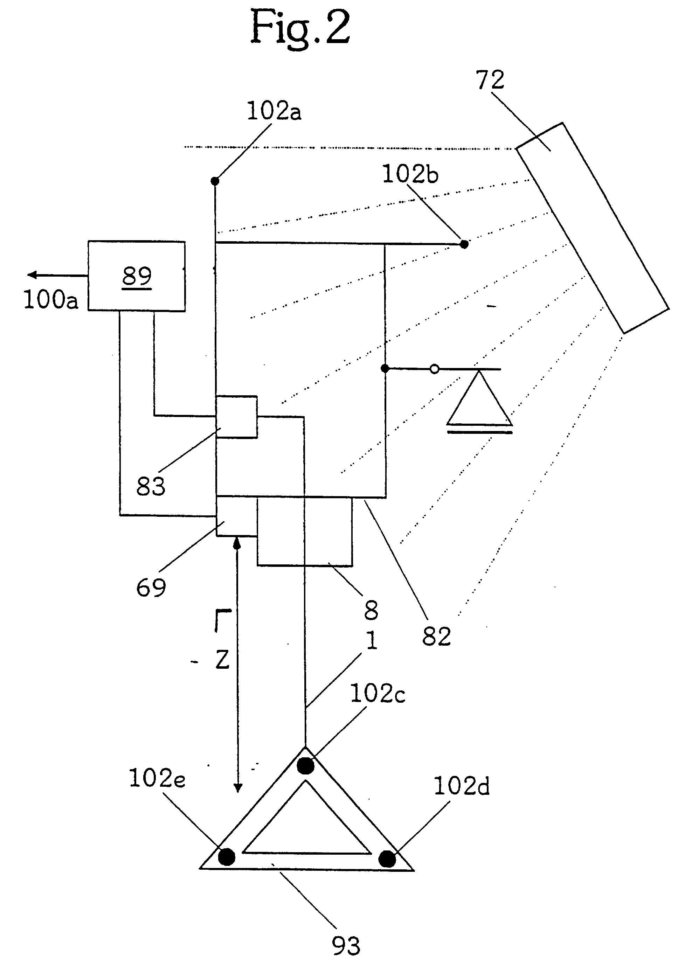

Fig 2 zeigt eine Möglichkeit, wie im Rahmen der Erfindung die Position des Operationsmikroskopes und des Prüfobjektes festgestellt werden kann. Dazu ist eine Positionserkennungseinrichtung 72 (z.B. eine PIXYS-Anordnung) raumfest montiert, die mit IR-Reflektoren 102 zusammenwirkt. Von der Einrichtung 72 pulsförmig ausgesandtes IR-Licht wird von den einzelnen Reflektoren reflektiert, woraus die Position der Reflektoren und damit die Lage des Prüfkörpers und des Mikroskopes im Raum ermittelt werden kann. Selbstverständlich können die Teile 102 auch als aktive Signalsender ausgebildet sein, deren Signale von der Einrichtung 72 empfangen und ausgewertet werden.

Das Mikroskop 82 verfügt weiters über eine Entfernungsmesseinrichtung 69 zur Bestimmung der Prüfobjektebene und über eine Vergrösserungsmesseinrichtung 83, die vorzugsweise durch das Hauptobjektiv 8 die Vergrösserung der Mikroskopoptik misst. Nicht eingezeichnet ist ein CCD o.dgl. zur Umwandlung des betrachteten Bildes in elektronisch weiterverarbeitbare Bilddaten.

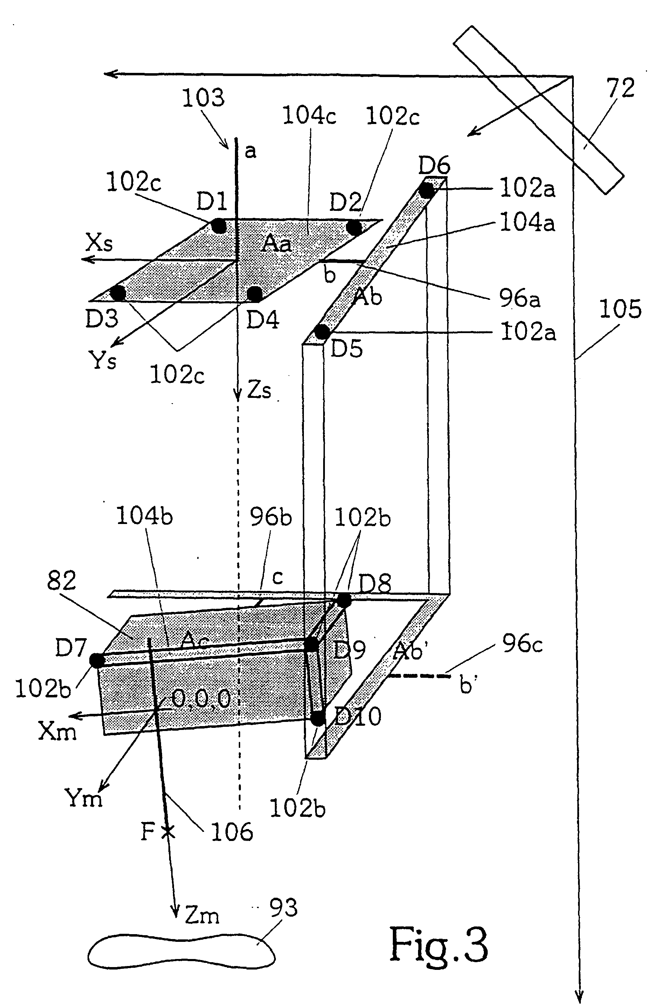

Fig.3 zeigt darüber hinaus symbolisch ein Mikroskop 82 an einem Stativ 103, an dem im Bereich seiner Gelenke 96, die jeweils eine Schwenkebene definieren, winkelförmig ausgebildete Positionsrahmen 104 montiert sind, die die IR-Reflektoren bzw. IR-Dioden tragen. Zum besseren Verstehen, wie diese Dioden oder Reflektoren bevorzugt ausgebildet sein können, wird ausdrücklich auf die Schweizer Patentanmeldung 1089/94-5 verwiesen. Die dargestellten Positionsrahmen sind wegen ihrer geometrischen Ausbildung gut geeignet, die richtige Position des Stativs 103 bzw. des mit diesem verbundenen Operationsmikroskopes 82 zu signalisieren, wobei die Dioden bzw. die Reflektoren 102a die Drehung des Mikroskopes 82 um die Achse b angibt und die Dioden bzw. Reflektoren 102c die Höhen- Dreh- und Schwenkposition des Mikroskopes 82 definieren, obwohl sie von diesem entfernt montiert sind (Montagealternative). Die Dioden 102b hingegen erlauben eine unmittelbare Lagebestimmung des Mikroskops 82. Da jedoch im unmittelbaren Bereich des Mikroskops durch die Anwender eine Abschattung eintreten kann, die gegebenenfalls eine Ortung der Lage erschwert, ist die dargestellte Variante mit den Dioden 102 a-c bevorzugt, da nach Kenntnis des Stativ- und Mikroskopaufbaus auch von den Dioden 102 a und c auf die Lage des Mikroskops 82 geschlossen werden kann, sofern an diesem wenigstens 1 Diode vom Positionsbestimmungssystem 72 angepeilt werden kann. a, b, c geben die Schwenkachsen des Stativs 103 an. 105 bedeutet das Koordinatensystem des Raumes, nach dem die Positionserfassungseinrichtung 72 (IR-Richtungsdetektoren) orientiert ist bzw. zu dem sie die Koordinatensysteme Xs, Ys, Zs des Stativs 103 bzw. des Mikroskops 82 (Xm, Ym, Zm) in Relation bringt. 106 stellt die optische Achse des Mikroskops dar, deren Lage zunächst das eigentliche Ziel der Positionsuntersuchung ist und mathematisch nach Kenntnis der Position der Dioden 102 bestimmt wird. Nach ihrer Lagekenntnis der optischen Achse kann man feststellen, welche Blickrichtung das Mikroskop 82 in bezug auf das Objekt 93 hat, sofern man dessen Lage kennt, die wiederum mit bekannten stereotaktischen Operationsmethoden feststellbar ist. Mit anderen Worten wird Mikroskop 82 bzw. dessen Strahlengang und das Objekt 93 einem gemeinsamen Koordinatensystem zugeordnet, so dass die bei einer Lageänderung des Mikroskops 82 auftretende Gesichtsfeldänderung am Objekt 93 rechnerisch erfasst und am Objekt nachvollzogen werden kann. Aus dieser Kenntnis ermöglicht sich die eingeblendete Darstellung des betreffenden Gebietes unter dem Gesichtsfeld z.B aus dem im Computer gespeicherten Satz dreidimensionaler Röntgendaten.

Nachdem im Mikroskop eine Videokamera integriert ist, die wie das Betrachterauge auf das Objekt 93 blickt und dabei gegebenenfalls auch das eingespiegelte bzw. uberlagerte Bild sieht, sind weitere Auswertungs- bzw. Kontrolluntersuchungen möglich, indem z.B. die Randdeckung der überlagerten Bilder bildverarbeitungsmässig überprüft wird. Eine getaktete Darstellung des überlagernden Bildes mit dem Aufnahmetakt der Videokamera ermöglicht dabei bei Bedarf eine für den Anwender selbst nicht sichtbare Auftrennung in das rein optisch abgebildete Bild durch den optischen Strahlengang des Mikroskops und in das elektronisch abgewandelte und überlagerte Bild.

Durch die Erfindung sind selbstverständlich auch Endoskope umfasst, die jedoch in der Regel nicht über ein Stativ verfügen, so dass deren Positionierung lediglich über Dioden am Endoskopkorper erfasst wird. Wichtig ist dabei, dass vor dem Einführen des Endoskops in ein Objekt, das Verhältnis der Endoskopspitze zu den Dioden am Endoskopkörper erfasst und festgelegt wird, um rechnerisch mittels Bildverarbeitung die Spitze des Endoskops - eventuell als Symbol dargestellt - im Bild nachzuführen.

Unter nicht sichtbarer Strahlung gem. Anspruch 1 sind alle jenen Medien zu verstehen, mit denen Diagnosedaten von einem Patienten oder von einem Objekt gewonnen werden können. Dazu zählen neben den elektromagnetischen Wellen beispielsweise auch Ultraschall und im Extremfall sogar mechanische Abtastvorgänge mittels Sensor, wobei diese Abtastvorgänge hinterher rechnerisch in eine bildhafte Darstellung des Gegenstandes umgewandelt werden.

### Bezugszeichenliste

Diese Bezugszeichenliste enthält auch Bezugszeichen von Figuren, die in den oben erwähnten Anmeldungen beinhaltet sind, da diese, wie erwähnt als im Rahmen dieser Erfindung liegend, zu Kombinationszwecken mitgeoffenbart gelten. Insbesondere betrifft dies die Mikroskope mit speziellen Strahlengängen und Strahlenteilern und die Vorrichtungen zum Messen der Vergrösserung und des Abstandes vom Mikroskop zum Objekt.
1 a,b erster Strahlengang
2 a,b zweiter Strahlengang (geometrisch übereinander gelegte erste Strahlengänge)
3 mechanooptisches Schaltelement
   3a,3b,3c undurchlässige und vorzugsweise verspiegelte Blende
   3d LCD-Shutter-Element
   3e mikromechanische Lamellenspiegelkonstruktion
   3f LCD Wechselshutterelement
4 Strahlenteiler
   4a,4b Strahlenteiler
   4c Strahlenteiler für Messstrahlausblendung
5 Scheibe
   5a halbkreisförmige Fläche -
   5b Restfläche der Scheibe 5
   5c Kreissegmentflächen
   5d
6 Achse für Scheibe
7 Mittelachse
   7a,7b Mittelachse
8 Hauptobjektiv
9 elektronische Bildaufnahmevorrichtung
10 Display
   10a Display
11 a,b Spiegel
12 a,b,c Verstelleinrichtung
13 Zoom
14 a,b Motor
15 Reziprokantrieb
16 Zuleitung
17 Lichtquelle
18 Okular
19 Umlenkspiegel
20 Schubstange
21 starrer Spiegel
22 Objekt, 22a Objektdetail
23 a,b, a',b'; c,d Planplatte
24 Schwenkantrieb
25 Gestänge
30 Lamellenspiegel von 3e
31 Tubuslinse
32 Einblendelement
   a) Strahlenteiler
   b) Spiegel
   c) zweites Einblendelement
33 Vergrösserungsoptik
34 Pfeile
35 weiterer Spiegel
36 Stellantrieb
37 Balken
38 a,b Umlenkspiegel
39 Retroprisma
40 Ausgleichsgewicht
41 Trägerplatte a.b,c: prismatische mit integriertem Spiegel
42 Farbfilter
43 Intervallschalter
44 Mikroprozessor
45 Messarray a
46 Referenzarray a
47 Modul für Bilddatenübertragung
48 Fremdbilddateninput
49 Stellmotor für Zoom 13; a,b
50 Verbindungsleitungen a-g
51 Vergrösserungsanzeige a,b,c
52 Kurvenscheibe
53 Kopplung
   a) zwischen Stellmotor 49 und Zoom 13
   b) zwischen Kurvenscheibe 52 und Vergrösserungsanzeige 51b
54 mechanischer Abgriff
55 a,b Zeiger
56 Laser
57 Messstrahl a,b,c,c1
58 Referenzstrahl
59 Pfeile für Verschiebbarkeit des Einblendelementes 32
60 Mikroskopstrahlengang a-e
61 erstes Umlenkelement a
62 Fokussierelement a,b
63 Lichtleiterendstück a,b
64 Lichtquelle a
65 zweites Umlenkelement
66 Sensor
67 Distanzbereich a
68 Verbindungsleitung
69 Distanzmesssystem
70 Verbindung
71 Vergrösserungsmesseinheit
72 Positionsbestimmungssystem a,b
73 Interferometer
74 halbdurchlässiger Spiegel
75 Reflektor
76 Detektor
77 elektromechanisches Verstellelement
78 Interferometersteuerung
79 Gitter
80 Detektor-CCD
81 Stufen
82 Mikroskop
83 Anordnung zur Vergrösserungsmessung des Mikroskopes
84 Anordnung zur Entfernungsmessung Objekt/Mikroskop
85 Positionsmesssystem zur Bestimmung der Absolutlage des Mikroskopes im Raum um daraus nach Kenntnis der Entfernung Objekt/Mikroskop auch auf die Lage des Sehfeldes am Objekt schliessen zu können
86 Toolbox für verschiedene Anwenderprogramme
87 Befehlssteuerorgan (Computermouse)
88 Befehlssteuerorgan zur Bewegungssteuerung des Mikroskopes (z.B. Fussschalter)
89 Datenaufbereitungseinheit
90 Computer (Werkstation)
91 Steuerschalter für Mikroskop
92 elektromechanische Steuereinheit für Mikroskop (Zoom, Fokus etc.)
93 Objekt
94 zweite Vorrichtung (z.B. MRI oder CT Gerät)
95 Überlagerungseinrichtung
96 a-c Gelenk am Stativ
97 adaptive Regelvorrichtung
98 a,b Erkennungseinheit
99 Speicher
100a Korrektureinheit
101 Patientendaten-Gerät
102a-e IR-Reflektoren oder IR-Dioden
103 Operationsmikroskopstativ
104 Positionsrahmen
105 Koordinatensystem des Raumes
106 optische Achse
o Abstand der Messstrahlen 57a und 57b
b' Abstand der Messstrahlen 57a und 57b am Messarray d 1,2 Stereobasis
Xm,Ym,Zm Koordinaten des Mikroskops 82
Xs,Ys,Zs Koordinaten des Stativs 103
F Brennpunkt des Mikroskops 82

## Patentansprüche

1. Bilddarstellende Einrichtung mit einem Stereomikroskop (82) zum Erfassen der bildhaften Information über einen Gegenstand (93) mit Licht und mit einer Vorrichtung (94) zum Erfassen oder Darstellen von einer - insbesondere einem Auge zunächst verborgenen - bildhaften Information über den Gegenstand (93) mit - insbesondere nicht sichtbarer - Strahlung und mit einer Überlagerungseinrichtung (95) für das Überlagern beider Informationen zu einem, einem Betrachterauge zuwendbaren, 3-D-Bild, wobei die Einrichtung eine adaptive Regelvorrichtung (97) umfasst, welche im Betriebszustand die, bei Veränderung gewisser instrumentaler Einstellparameter des Mikroskops (82) bewirkte, Veränderung in der bildhaften Information der Vorrichtung nachführt, wobei eine Positionserkennungseinrichtung (72), eine Entfernungsmesseinrichtung (69) und eine Vergrößerungsmesseinrichtung (83) die Position des Mikroskops (82), den Z-Abstand des Mikroskops(82) und die Vergrößerung des Mikroskops (82) ermitteln und diese Werte der Regelvorrichtung (97) zur Verfügung stehen, **dadurch gekennzeichnet, dass** die Regelvorrichtung (97) so eingerichtet ist, dass sie im Betriebszustand jede bei Veränderung instrumentaler Einstellparameter des Mikroskops (82) bewirkte Veränderung der dreidimensionalen Abbildungsgeometrie erfasst und eine entsprechende geometrische Korrektur der dreidimensionalen Bilddaten der anderen Vorrichtung (94) veranlasst, so dass sich die sichtbaren geometrischen Abmessungen der bildhaften Informationen in allen primären und sekundären Abbildungsparametern - insbesondere Blickrichtung bzw. Blickwinkel, Perspektive usw., z.B. Mikroskopausrichtung und Vergrösserung des Mikroskopstrahlenganges und Gesichtsfeld und Schärfentiefebereich decken, und dass der Regelvorrichtung (97) ein Speicher (99) zugeordnet ist, der Korrekturdaten zur geometrischen Korrektur zur Verfügung stellt, die vorab berechnete nötige Korrekturvorschriften für die Metrikanpassung in Form von für den Lichtstrahlengang typenspezifischen Algorithmen umfassen.

2. Einrichtung nach Anspruch 1, **dadurch gekennzeichnet, dass** die Regelvorrichtung (97) für das Korrigieren bzw. Verändern der sekundären Abbildungsparameter durch eine Einrichtung zur Entfernungsmessung (69) der Prüfobjektebene und zur Messung der Vergrösserung (83) ausgebildet ist.

3. Einrichtung nach einem der Ansprüche 1 oder 2, **dadurch gekennzeichnet, dass** die Regelvorrichtung (97) für das Korrigieren bzw. Verändern der tertiären Abbildungsparameter, d.h. z.B.: Störung der Metrik, Verzeichnung in Abhängigkeit von z-Abstands- und Gammamessung im Strahlengang der ersten Vorrichtung, ausgebildet ist.

4. Einrichtung nach Anspruch 3, **dadurch gekennzeichnet, dass** die Regelvorrichtung (97) im Betriebszustand in Abhängigkeit von der z- und Gammamessung regelt.

5. Einrichtung nach einem der vorhergehenden Ansprüche, **dadurch gekennzeichnet, dass** der Regelvorrichtung (97) ein Speicher (99) zugeordnet ist, in dem vorab berechnete nötige Korrekturvorschriften für die Metrikanpassung in Form von für den Lichtstrahlengang typenspezifischen Algorithmen eingespeichert sind und der Bildkorrektur zugrundegelegt werden.

6. Einrichtung nach einem der Ansprüche 1 bis 5, **dadurch gekennzeichnet, dass** der Regelvorrichtung (97) ein Speicher (99) zugeordnet ist, in dem vorab berechnete und durch einen Eichvorgang bestimmte Eichparameter abgespeichert sind, oder dass in dem Speicher (99) auch durch vorgängige Eichung ermittelte Eichparameter abgelegt sind, welche Eichparameter der Bildkorrektur zugrundegelegt werden.

7. Einrichtung nach Anspruch 6, **dadurch gekennzeichnet, dass** den Vorrichtungen für die Eichvorgänge ein Normbauteil (93) zugeordnet ist, der für die Strahlen der beiden Vorrichtungen (82,94) geometrisch gleichförmig erfassbare Strukturen aufweist und der Einrichtung beim Eichvorgang als Objekt unterlegt wird.

8. Einrichtung nach einem der vorhergehenden Ansprüche, **dadurch gekennzeichnet, dass** der Regelvorrichtung (97) wenigstens ein Messglied (69,83) für das Messen der optischen Abbildungsparameter des Mikroskops (82) zugeordnet ist, wobei dem Messglied vorzugsweise eine Datenaufbereitungseinheit (89) - für das Berechnen der erforderlichen Adaptionsparameter und für das proportional richtige Korrigieren des zweiten Bildes in Abhängigkeit vom ersten Bild und den jeweiligen optischen Parametern des Mikroskops (82) - zugeordnet ist.

9. Verfahren für das Überlagern von zunächst unterschiedlichen ersten und wenigstens zweiten Bilddaten, von denen die ersten Bilddaten aus einem Mikroskopstrahlengang (1) stammen, **dadurch gekennzeichnet, dass** dem Mikroskopstrahlengang (1) ein geometrisch bekanntes Objekt (93) vorgelegt wird und die von der Wirklichkeit durch primäre, sekundäre oder tertiäre Abbildungsparameter abweichenden Bildinformationen der ersten Bilddaten erfasst werden, dass die Abweichungen - in Form von Rechenvorschriften gefasst - den zweiten Bilddaten eingeschrieben werden, so dass diese entsprechend den primären, sekundären und tertiären Abbildungsparametern dimensional korrigiert werden, worauf die zweiten Bilddaten dann positionsrichtig und deckungsgleich den ersten Bilddaten optisch oder elektronisch überlagert werden, wobei eine Positionserkennungseinrichtung (72), eine Entfernungsmesseinrichtung (69) und eine Vergrößerungsmesseinrichlung (83) die Position des Mikroskops (82), den Z-Abstand des Mikroskops (82) und die Vergrößerung des Mikroskops (82) ermitteln und diese Werte einer Regelvorrichtung (97) zur Verfügung stehen, und wobei vorab berechnete nötige Korrekturvorschriften für die Metrikanpassung in Form von für den Lichtstrahlengang typenspezifischen Algorithmen vorliegen.

10. Verfahren nach Anspruch 9, **dadurch gekennzeichnet, dass** gleichzeitig die von der Wirklichkeit durch zweite sekundäre oder tertiäre Abbildungsparameter abweichenden Informationen der zweiten Bilddaten ebenso erfasst und als Rechenvorschrift zur Datenkorrektur der ersten Bilddaten verwendet werden.

11. Verfahren nach Anspruch 9 oder 10, **dadurch gekennzeichnet, dass** die Bilddaten der zweiten Vorrichtung an die Bilddaten der ersten Vorrichtung (82) hinsichtlich der ersten Abbildungsparameter angeglichen werden.

12. Verfahren nach einem der Ansprüche 9 bis 11, **dadurch gekennzeichnet, dass** die von der Wirklichkeit abweichenden Bildinformationen kontinuierlich erfasst werden, wenigstens jedoch sobald am Mikroskopstrahlengang (1) oder an der Position des Objektes (93) Veränderungen vorgenommen wurden, und dass die Parameter der Rechenvorschrift dementsprechend kontinuierlich angepasst werden.

13. Verfahren nach einem der Ansprüche 9 bis 12, **dadurch gekennzeichnet, daß** die Rechenvorschrift eine Polynomfunktion wie Polynome höherer Ordnung, den Parameter Gamma, d.h. die Vergrößerung, den Abstand Z zum Objekt, die Wellenlänge und Objektkoordinaten umfaßt, wobei aus den bekannten Koordinaten des Objektes wie z.B. eines Testobjektes bzw. den sich daraus ergebenden rechnerisch ermittelbaren berechneten Koordinaten und den festgestellten Koordinaten des Bildes die Residuen ermittelt werden, die zur Adaption herangezogen werden.

14. Verfahren nach einem der Ansprüche 9 bis 13, **dadurch gekennzeichnet, daß** für jede Vorrichtung (82,94) die Bilddaten nach Erfassung ihrer Abweichung von der Wirklichkeit im Zuge einer Eichmessung so korrigiert werden, daß alle wirklichkeitsgetreu dargestellten Bilder geometrisch mit dem Gegenstand (93) kongruent sind.

15. Verfahren nach einem der Ansprüche 9 bis 13, **dadurch gekennzeichnet, daß** im dargestellten Bild aktuelle Systemdaten bzw. sekundäre Abbildungsparameter des ersten Strahlenganges (1) wie z.B. Vergrößerung oder ein entsprechender Maßstab, d.h. das Größenverhältnis für den Betrachter eingeblendet werden.

16. Operationsmikroskop mit einer Einrichtung nach einem der Ansprüche 1 bis 8 für das Durchführen eines der Verfahren nach Anspruch 9 bis 15.

17. Videostereomikroskop mit einer Einrichtung nach einem der Ansprüche 1 bis 8 und mit einer Videokamera, die gleichzeitig oder alternierend das Bild des Objektes (93) und das diesem überlagerte Bild aus der zweiten Vorrichtung (94) aufnimmt und mit der adaptiven Regelvorrichtung (97) verbunden ist, wobei letztere über eine Software - vorzugsweise nach einem Regelkreisprinzip - zur Optimierung der aneinander anzupassenden Bilddaten verfügt.

## Claims

1. Image-representing instrument with a stereomicroscope (82) for recording the image-containing information about an object (93) with light, and with a device (94) for recording or representing image-containing information - in particular initially hidden from the eye - about the object (93) with - in particular invisible - radiation, and with a superposition instrument (95) for superposing both types of information to form a 3D image which can be presented to an observer's eye, wherein the instrument comprises an adaptive control device (97) which, in the operating state, tracks the change in the image-containing information of the device caused by changing certain equipment setting parameters of the microscope (82), wherein a position-detection instrument (72), a range-measurement instrument (69) and a magnification-measurement instrument (83) determine the position of the microscope (82), the Z distance of the microscope (82) and the magnification of the microscope (82), and provide these values to the control device (97), **characterized in that** the device (97) is designed so that, in the operating state, it records each change of the three-dimensional imaging geometry caused by changing equipment setting parameters of the microscope (82), and applies a corresponding geometrical correction of the three-dimensional image data of the other device (94) so that the visible geometrical dimensions of the image-containing information match in respect of all primary and secondary imaging parameters - in particular viewing direction or viewing angle, perspective etc., for example microscope alignment and magnification of the microscope beam path and field of view and depth of field, and **in that** the control device (97) is assigned a memory (99), which provides the geometrical correction with correction data which comprise previously calculated necessary correction rules for the metric adaptation, in the form of type-specific algorithms for the light beam path.

2. Instrument according to Claim 1, **characterized in that** the control device (97) is designed for correcting or changing the secondary imaging parameters due to an instrument for range measurement (69) of the test object plane and for measuring the magnification (83).

3. Instrument according to Claim 1 or 2, **characterized in that** the control device (97) is designed for correcting or changing the tertiary imaging parameters, for example perturbation of the metrics, distortion as a function of z distance and gamma measurement in the beam path of the first device.

4. Instrument according to Claim 3, **characterized in that** the control device (97) performs control in the operating state as a function of the z distance and gamma measurement.

5. Instrument according to one of the preceding claims, **characterized in that** the control device (97) is assigned a memory (99), in which previously calculated necessary correction rules for the metric adaptation are stored in the form of type-specific algorithms for the light beam path, the image correction being based on these.

6. Instrument according to one of Claims 1 to 5, **characterized in that** the control device (97) is assigned a memory (99), in which previously calculated calibration parameters determined by a calibration process are stored, or **in that** calibration parameters determined by previous calibration are also saved in the memory (99), the image correction being based on these calibration parameters.

7. Instrument according to Claim 6, **characterized in that**, for the calibration processes, the devices are assigned a standard component (93), which has geometrically equivalently recordable structures for the beams of both devices (82, 94) and which is treated as an object by the instrument during the calibration process.

8. Instrument according to one of the preceding claims, **characterized in that** the control device (97) is assigned at least one measuring element (69, 83) for measuring the optical imaging parameters of the microscope (82), the measuring element preferably being assigned a data processing unit (89) - for calculation of the required adaptation parameters and for proportionally accurate correction of the second image as a function of the first and the respective optical parameters of the microscope (82).

9. Method for superposing initially different first and second image data, of which the first image data come from a microscope beam path (1), **characterized in that** a geometrically known object (93) is placed in the microscope beam path (1), and the image information of the first image data deviating from reality by primary, secondary or tertiary imaging parameters is recorded, **in that** the deviations - collated in the form of computation rules - are written into the second image data so that these are dimensionally corrected according to the primary, secondary and tertiary imaging parameters, whereupon the second image data are then optically or electronically superposed positionally accurately and congruently with the first image data, wherein a position-detection instrument (72), a range-measurement instrument (69) and a magnification-measurement instrument (83) determine the position of the microscope (82), the Z distance of the microscope (82) and the magnification of the microscope (82), and provide these values to the control device (97), and wherein previously calculated necessary correction rules for the metric adaptation are provided in the form of type-specific algorithms for the light beam path.

10. Method according to Claim 9, **characterized in that** the information of the second image data deviating from reality by second secondary or tertiary imaging parameters are also recorded at the same time, and are used as a computation rule for the data correction of the first image data.

11. Method according to Claim 9 or 10, **characterized in that** the image data of the second device are assimilated to the image data of the first device (82) with respect to the first imaging parameters.

12. Method according to one of Claims 9 to 11, **characterized in that** image information deviating from reality is recorded continuously, but at the least as soon as changes have been made to the microscope beam path (1) or to the position of the object (93), and **in that** the parameters of the computation rule are continuously adapted accordingly.

13. Method according to one of Claims 9 to 12, **characterized in that** the computation rule comprises a polynomial function such as higher-order polynomials, the gamma parameter, that is to say the magnification, the distance from the object, the wavelength and object coordinates, wherein the residues are determined from the known coordinates of the object, for example a test object, or the computationally determinable calculated coordinates resulting therefrom and the fixed coordinates of the image, and are employed for the adaptation.

14. Method according to one of Claims 9 to 13, **characterized in that**, after recording their deviation from reality, the image data for each device (82, 94) are corrected in the scope of a calibration measurement so that all images represented true to reality are geometrically congruent with the object (93).

15. Method according to one of Claims 9 to 13, **characterized in that** current system data and/or secondary imaging parameters of the first beam path (1), for example magnification or a corresponding scale, that is to say size ratio, are overlaid for the observer in the represented image.

16. Operation microscope with an instrument according to one of Claims 1 to 8 for carrying out one of the methods according to Claims 9 to 15.

17. Video stereomicroscope with an instrument according to one of Claims 1 to 8 and with a video camera, which simultaneously or alternately records the image of the object (93) and the image superposed with it from the second device (94), and which is connected to the adaptive control device (97), the latter having software - preferably according to a control loop principle - for optimizing the image data to be mutually adapted.

## Revendications

1. Équipement de représentation d'image avec un microscope stéréoscopique (82) pour saisir l'information d'image d'un objet (93) au moyen de la lumière et à l'aide d'un dispositif (94) pour saisir ou pour représenter une information d'image d'un objet (93), notamment cachée initialement à l'oeil nu, au moyen d'un rayonnement, notamment invisible, et avec un équipement de superposition (95) pour la superposition des deux informations en une image 3D pouvant être orientée vers l'oeil d'un observateur, l'installation comportant un dispositif de régulation adaptatif (97) qui, en fonctionnement, suit la modification de l'information d'image du dispositif, entraînée par la modification de certains paramètres de réglage instrumentaux du microscope (82), un équipement de reconnaissance de la position (72), un équipement de mesure de la distance (69) et un équipement de mesure du grossissement (83) déterminant la position du microscope (82), la distance en Z du microscope (82) et le grossissement du microscope (82) et ces valeurs étant mises à la disposition du dispositif de régulation (97), **caractérisé en ce que** le dispositif de régulation (97) est installé de manière à saisir, en fonctionnement, chaque modification de la géométrie de la représentation à trois dimensions entraînée par la modification de paramètres de réglage instrumentaux du microscope (82) et à provoquer une correction géométrique correspondante des données d'image tridimensionnelles de l'autre dispositif (94) de telle sorte que les dimensions géométriques visibles de l'information d'image se superposent dans tous les paramètres de représentation primaires et secondaires, en particulier la direction de la vue ou selon le cas l'angle de vue, la perspective, etc., par exemple l'orientation du microscope et le grossissement du chemin optique dans le microscope et le champ de vision et la profondeur de champ, et que le dispositif de régulation (97) est pourvu d'une mémoire (99) qui fournit des données de correction pour la correction géométrique qui comportent les consignes de correction nécessaires calculées antérieurement pour l'adaptation de la métrique sous la forme d'algorithmes de type spécifique au chemin optique de la lumière.

2. Équipement selon la revendication 1, **caractérisé en ce que** le dispositif de régulation (97) est réalisé pour la correction respectivement la modification des paramètres de représentation secondaires au moyen d'un équipement pour la mesure de la distance (69) du plan de l'objet à examiner et pour la mesure du grossissement (83).

3. Équipement selon une des revendications 1 ou 2, **caractérisé en ce que** le dispositif de régulation (97) est réalisé pour la correction respectivement la modification des paramètres de représentation tertiaires, c'est-à-dire par exemple une perturbation de la métrique, une erreur dans le dessin en fonction de la mesure de la distance en Z et du gamma sur le chemin optique du premier dispositif.

4. Équipement selon la revendication 3, **caractérisé en ce que** le dispositif de régulation (97) en fonctionnement régule en fonction de la mesure de Z et du gamma.

5. Équipement selon une des revendications précédentes, **caractérisé en ce que** le dispositif de régulation (97) est pourvu d'une mémoire (99) qui mémorise des consignes de correction nécessaires calculées antérieurement pour l'adaptation de la métrique sous la forme d'algorithmes de type spécifique au chemin optique de la lumière et qui sont à la base de la correction de l'image.

6. Équipement selon une des revendications 1 à 5, **caractérisé en ce que** le dispositif de régulation (97) est pourvu d'une mémoire (99) qui mémorise des paramètres d'étalonnage calculés antérieurement et déterminés par un processus d'étalonnage ou **en ce que** la mémoire (99) contient également des paramètres d'étalonnage déterminés par des étalonnages précédents, ces paramètres d'étalonnage étant à la base de la correction de l'image.

7. Équipement selon la revendication 6, **caractérisé en ce que** les dispositifs pour les processus d'étalonnage sont pourvus d'un composant de normalisation (93) qui présente pour les rayons des deux dispositifs (82, 94), des structures de même forme géométrique pouvant être saisies et qui est soumis à l'équipement sous la forme d'un objet lors du processus d'étalonnage.

8. Équipement selon une des revendications précédentes, **caractérisé en ce que** le dispositif de régulation (97) est pourvu d'un élément de mesure au moins (69, 83) pour la mesure des paramètres de représentation optiques du microscope (82), l'élément de mesure étant de préférence pourvu d'une unité de traitement des données (89) pour le calcul des paramètres d'adaptation nécessaires et pour la correction proportionnelle correcte de la deuxième image en fonction de la première image et des paramètres optiques courants du microscope (82).

9. Procédé pour la superposition des première et au moins deuxième données d'image initialement différentes, dont les premières données d'image proviennent du chemin optique d'un microscope (1), **caractérisé en ce qu'**un objet géométrique connu (93) est mis sur le chemin optique du microscope (1) et **en ce qu'**on saisit les informations d'image des premières données d'image, déviant de la réalité par les paramètres de représentation primaires, secondaires ou tertiaires, **en ce qu'**on enregistre les déviations, regroupées sous la forme d'instructions de calcul, dans les deuxièmes données d'image de manière à corriger la dimension de celles-ci en fonction des paramètres de représentation primaires, secondaires et tertiaires, après quoi les deuxièmes données d'image sont alors superposées optiquement ou électroniquement aux premières données d'image à la bonne position et avec la bonne superposition, un équipement de reconnaissance de la position (72), un équipement de mesure de la distance (69) et un équipement de mesure du grossissement (83) déterminant la position du microscope (82), la distance en Z du microscope (82) et le grossissement du microscope (82) et ces valeurs étant mises à la disposition d'un dispositif de régulation (97), les consignes de correction nécessaires calculées antérieurement pour l'adaptation de la métrique sous la forme d'algorithmes de type spécifique au chemin optique de la lumière existant.

10. Procédé selon la revendication 9, **caractérisé en ce qu'**on saisit simultanément aussi les informations des deuxième données d'image déviant de la réalité par les deuxièmes paramètres de représentation secondaires ou tertiaires et qu'on les utilise comme instructions de calcul pour la correction des premières données d'image.

11. Procédé selon la revendication 9 ou 10, **caractérisé en ce que** les données d'image du deuxième dispositif sont ajustées aux données d'image du premier dispositif (82) en ce qui concerne les premiers paramètres de représentation.

12. Procédé selon une des revendications 9 à 11, **caractérisé en ce qu'**on saisit en continu les informations d'image déviant de la réalité, toutefois au moins dès que des changements ont été entrepris sur le chemin optique du microscope (1) ou sur la position de l'objet (93), et **en ce que** les paramètres de l'instruction de calcul sont constamment adaptés en conséquence.

13. Procédé selon une des revendications 9 à 12, **caractérisé en ce que** l'instruction de calcul comporte une fonction polynomiale comme des polynômes de degré élevé, le paramètre gamma, c'est-à-dire le grossissement, la distance en Z de l'objet, la longueur d'onde et les coordonnées de l'objet, et qu'on peut déterminer les résidus, nécessaires pour l'adaptation, à partir des coordonnées connues de l'objet, comme par exemple un objet à tester ou selon le cas les coordonnées calculées qui en résultent et qui peuvent être déterminées par calcul, et des coordonnées constatées de l'image.

14. Procédé selon une des revendications 9 à 13, **caractérisé en ce que** pour chaque dispositif (82, 94), on corrige les données d'image après saisie de leur déviation de la réalité dans la séquence d'un étalonnage, de telle sorte que toutes les images représentées fidèlement par rapport à la réalité congruent géométriquement avec l'objet (93).

15. Procédé selon une des revendications 9 à 13, **caractérisé en ce qu'**on incruste dans l'image représentée, pour l'observateur, des données actuelles du système respectivement des paramètres de représentation secondaires du premier chemin optique (1) comme par exemple le grossissement ou une échelle correspondante, c'est-à-dire le rapport des grandeurs.

16. Microscope pour opération avec un équipement selon une des revendications 1 à 8 pour l'exécution d'un des procédés selon les revendications 9 à 15.

17. Microscope stéréoscopique vidéo avec un équipement selon une des revendications 1 à 8 et avec une caméra vidéo qui prend simultanément ou alternativement l'image de l'objet (93) et celle de l'image du deuxième équipement (94) qui lui est superposée et qui est reliée au dispositif de régulation adaptatif (97), ce dernier disposant d'un logiciel - de préférence selon un principe de circuit de régulation - pour l'optimisation des données d'image qu'il s'agit de faire correspondre les unes avec les autres.
